# EUROPEAN PATENT SPECIFICATION

(11) **EP 2 310 658 B1**
(45) Date of publication and mention of the grant of the patent: **09.08.2017**
(21) Application number: 10736950.6
(22) Date of filing: 18.06.2010
(51) Int. Cl.: F02M 26/00

(54) **BYPASS VALVE HAVING EGR VALVE**
BYPASS-VENTIL MIT EGR-VENTIL
SOUPAPE DE DÉRIVATION COMPRENANT UNE SOUPAPE EGR

(30) Priority: 25.08.2009 KR 20090078630
(43) Date of publication of application: 20.04.2011
(73) Proprietor: Unick Corporation, Busan 602-819 (KR)
(72) Inventor: LEE, Chang Hoon, Saha-gu Busan 604-080 (KR); MOON, Kuk Chan, Seo-gu Busan 602-090 (KR); KIM, Dong Woo, Gimhae-si Gyeongsangnam-do 621-080 (KR); KIM, Yun Su, Buk-gu Busan 616-759 (KR); LEE, Kyung Min, Haeundae-gu Busan 612-061 (KR); LEE, Ji Yong, Gimhae-se Gyeongsangnam-do 621-767 (KR)
(74) Representative: Franke, Dirk
(86) International application number: PCT/KR2010/003979
(87) International publication number: WO 2011/025135

(56) References cited:
- EP-A1- 2 025 910
- EP-A2- 1 589 214
- WO-A1-2009/047278
- DE-A1-102005 044 088
- DE-A1-102007 007 393
- JP-A- 2008 002 472
- KR-A- 20060 069 485
- KR-B1- 100 906 381
- US-A1- 2009 139 502

## Description

### Technical Field

The present invention relates to a bypass valve disposed in an exhaust gas recirculation (EGR) system, and more particularly to a bypass valve having an EGR valve in which the EGR valve and the bypass valve are assembled into a module.

### Background Art

In general, exhaust gas which is produced at the time of combusting mixture gas and is discharged to the outside via an exhaust pipe contains noxious substances such as carbon monoxide (CO), nitrogen oxide (NOₓ), non-combusted hydrocarbon (HC).

The nitrogen oxide as the noxious substance contained in the exhaust gas is inversely proportional to the carbon monoxide and the hydrocarbon. That is, at the time point when fuel is completely combusted and the carbon monoxide and the hydrocarbon are least discharged, the nitrogen oxide is most produced.

Therefore, since an allowable amount of contaminants containing the nitrogen oxide is regulated with the related laws, various techniques for reducing the contaminants in the exhaust gas. One of them is an exhaust gas recirculation (EGR) system.

In the EGR system, a part of exhaust gas is recirculated to minimize the decrease in power, and the highest combustion temperature is lowered to reduce the amount of nitrogen oxide. More specifically, when exhaust gas containing carbon dioxide (CO₂), which has a greater thermal capacity than that of nitrogen (N₂), is mixed into the mixture gas at an appropriate ratio, the highest combustion temperature of an engine can be lowered, thereby reducing the amount of nitrogen oxide.

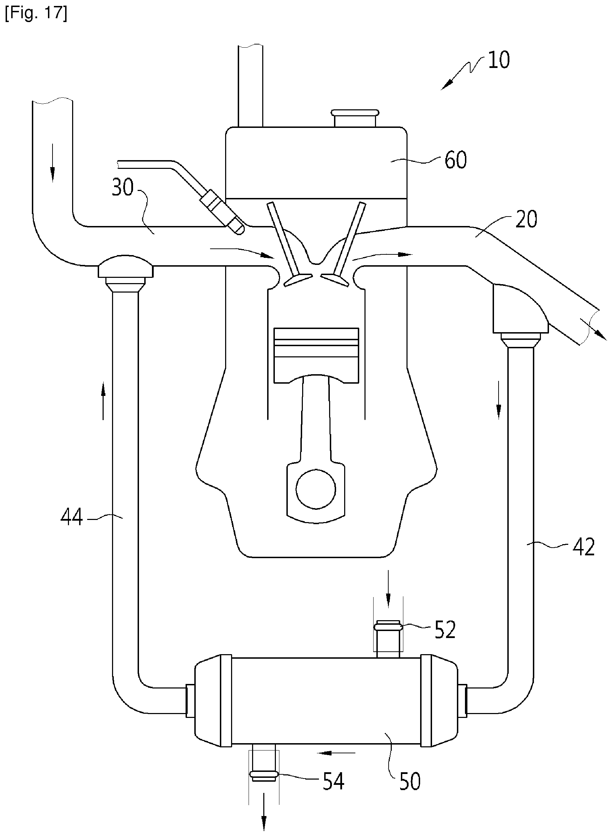

FIG. 17 is a diagram schematically illustrating the configuration of a known exhaust gas recirculation system. The exhaust gas recirculation system is described as follows with reference to FIG. 17.

The exhaust gas recirculation system 10 includes recirculation pipes 42 and 44 for recirculating a part of exhaust gas discharged from an exhaust manifold 20 to an intake manifold 30 and an EGR cooler assembly 50 disposed in the recirculation pipes 42 and 44 so as to cool the recirculated exhaust gas.

The recirculation pipes 42 and 44 include an inlet pipe 42 connected to an end of the EGR cooler assembly 50 so as to receive high-temperature exhaust gas and an outlet pipe 44 connected to the other end of the EGR cooler assembly 50 so as to discharge the exhaust gas cooled by the EGR cooler assembly 50.

Although not shown in the drawing, an EGR valve for recirculating the exhaust gas and a bypass valve selectively receiving the exhaust gas introduced via the inlet pipe 42 are disposed in the inlet pipe 42.

The EGR cooler assembly 50 is a heat exchanger of a shell and tube type, and cools the high-temperature exhaust gas introduced via the inlet pipe 42 using a coolant of an engine 60. Accordingly, an introduction pipe 52 for introducing the coolant and a discharge pipe 54 for discharging the coolant are disposed in the EGR cooler assembly 50.

However, in the known exhaust gas recirculation system 10, since the EGR valve (not shown) and the bypass valve (not shown) are distributed therein, the number of components for connecting them to each other increases. Accordingly, the configuration is complicated and it is difficult to guarantee a space at the time of designing an engine.

The exhaust gas is not efficiently cooled using the EGR cooler assembly 50, and thus the reduction of nitrogen oxide is poor. In addition, the durability of components relating to the bypass valve decreases.

The German patent application DE 10 2005 044 088 A1 relates to an apparatus for controlling an exhaust gas stream of a passenger car's internal combustion engine, comprising an exhaust housing and a movable first actuating element, wherein the exhaust gas stream can be guided by adjustment of the first actuating element into a first exhaust gas duct or, alternatively into a second exhaust passage, wherein a second control element for controlling the exhaust stream is mounted on the housing.

### Disclosure of Invention

### Technical Problem

The invention is made to solve the above-mentioned problems. A goal of the invention is to provide a bypass valve having an EGR valve in which the bypass valve and the EGR valve are assembled into a module, thereby effectively guaranteeing a space of an engine room at the time of designing a vehicle engine.

Another goal of the invention is to provide a bypass valve having an EGR valve which does not require components for connecting the bypass valve and the EGR valve, thereby reducing the cost.

Another goal of the invention is to provide a bypass valve having an EGR valve in which exhaust gas introduced into an EGR cooler is first cooled by the bypass filter, thereby efficiently reducing the amount of nitrogen oxide to be generated.

### Solution to Problem

According to an aspect of the invention, there is provided a bypass valve having an EGR valve, including: an intake port formed in a side surface of a valve housing; a first exhaust port formed in another side surface of the valve housing and connected to a cooling flow channel of an EGR cooler; a second exhaust port formed adjacent to the first exhaust port and connected to a bypass flow channel of the EGR cooler; a gas transfer channel formed in the valve housing and having a junction section formed in the middle thereof so as to connect the intake port to the first and second exhaust ports; an EGR valve coupling section formed in the top surface of the valve housing close to the intake port; the EGR valve coupled to the EGR valve coupling section and partially located at a position of the gas transfer channel close to the intake port so as to pass or intercept exhaust gas; and a flap swingably disposed in the junction section so as to selectively open and close the first and second exhaust ports.

The junction section formed in the gas transfer channel is a prism-like space surrounded with three inner walls. An intake hole connected to the intake port is formed in one of the three inner walls and first and second exhaust holes connected to the first and second exhaust ports, respectively, are formed in the other two inner walls. The first and second exhaust holes are selectively opened and closed by the flap disposed in the junction section.

A coolant transfer channel is formed along the circumference of the EGR valve coupling section, an inlet of the coolant transfer channel is connected to a coolant outlet of the EGR cooler, and the outlet of the coolant transfer channel is connected to a radiator. An auxiliary transfer channel connected to the intake hole is formed in the inner wall close to the intake port of the gas transfer channel into which a part of the EGR valve is inserted.

### Advantageous Effects of Invention

As described above, in the bypass valve having an EGR valve according to the invention, the bypass valve and the EGR valve are assembled into a module. Accordingly, it is advantageous for guaranteeing a space of an engine room at the time of designing a vehicle engine. In addition, the components for connecting the bypass valve and the EGR valve are not necessary, thereby reducing the cost.

Since the exhaust gas introduced into the EGR cooler is first cooled by forming the coolant transfer channel around the EGR valve disposed around the intake port, it is possible to improve the cooling efficiency of the EGR cooler and to efficiently reduce the amount of nitrogen oxide to be generated.

Since the flap selectively opening and closing the first and second exhaust holes swings between two inner walls (which forms an angel of 60° to 70° of the junction section, the motion resistance is small. Accordingly, the flap and the driving mechanism for swinging the flap can smoothly work and the erroneous operation or the deformation is not caused even in a long-term use, thereby improving the durability.

### Brief Description of Drawings

FIG. 1 is a diagram illustrating a bypass valve having an EGR valve according to an embodiment of the invention.
FIG. 2 is a diagram illustrating a state where the EGR valve is removed from the bypass valve having an EGR valve according to the embodiment of the invention.
FIGS. 3 to 5 are diagrams illustrating the bypass valve shown in FIG. 2 as viewed in different directions.
FIGS. 6 and 7 are diagrams illustrating the operation of a flap in the bypass valve having an EGR valve according to the embodiment of the invention.
FIG. 8 is a diagram illustrating the EGR valve coupled to the bypass valve having an EGR valve according to the embodiment of the invention.
FIGS. 9 and 10 are diagrams illustrating a driving mechanism in the bypass valve having an EGR valve according to the embodiment of the invention.
FIGS. 11 and 12 are diagrams illustrating states where an EGR cooler is coupled to and decoupled from the bypass valve having an EGR valve according to the embodiment of the invention.
FIG. 13 is a diagram illustrating a bypass valve having an EGR valve according to another embodiment of the invention.
FIG. 14 is a diagram illustrating a state where the EGR valve is removed from the bypass valve shown in FIG. 13.
FIGS. 15 and 16 are diagrams illustrating the recirculation of exhaust gas using the bypass valve having an EGR valve according to another embodiment of the invention.
FIG. 17 is a diagram schematically illustrating a known exhaust gas recirculation system.

### Mode for the Invention

Hereinafter, exemplary embodiments of the invention will be described in detail with reference to the accompanying drawings. In describing the exemplary embodiments of the invention, like elements in different drawings are referenced by like reference numerals.

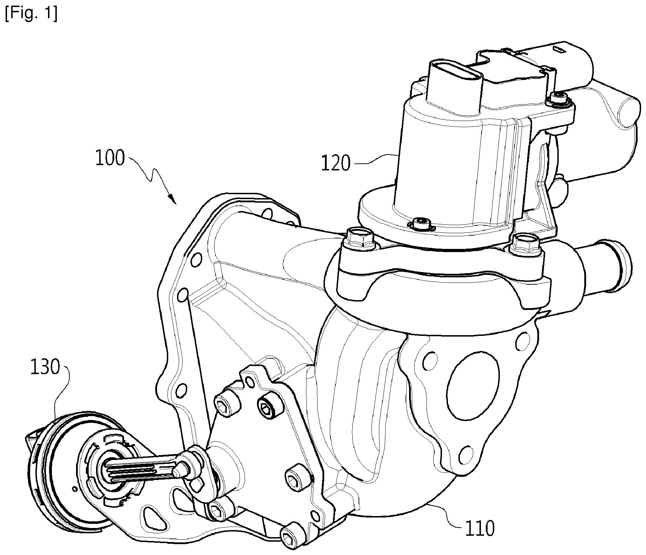

FIG. 1 is a diagram illustrating a bypass valve having an EGR valve according to an embodiment of the invention.

As shown in FIG. 1, a bypass valve having an EGR valve 100 according to an embodiment of the invention (hereinafter, referred to as "bypass valve") includes a valve housing 110, an EGR valve 120 coupled to the top surface of the valve housing 110, and a driving mechanism 130 coupled to the front surface of the valve housing 110.

The bypass valve 100 having the above-mentioned configuration becomes a module by coupling the EGR valve 120 to the valve housing 110. Accordingly, the engine volume decreases, which is advantageous for guaranteeing a space for an engine room at the time of designing a vehicle engine. Components for connecting the bypass valve 100 and the EGR valve 120 are not necessary, thereby reducing the cost.

The structure of the valve housing 110 for assembling the bypass valve 100 and the EGR valve 120 into a module will be described.

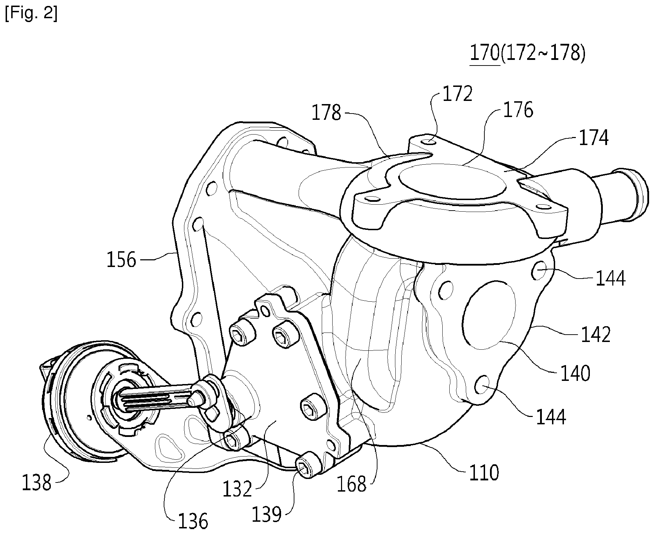

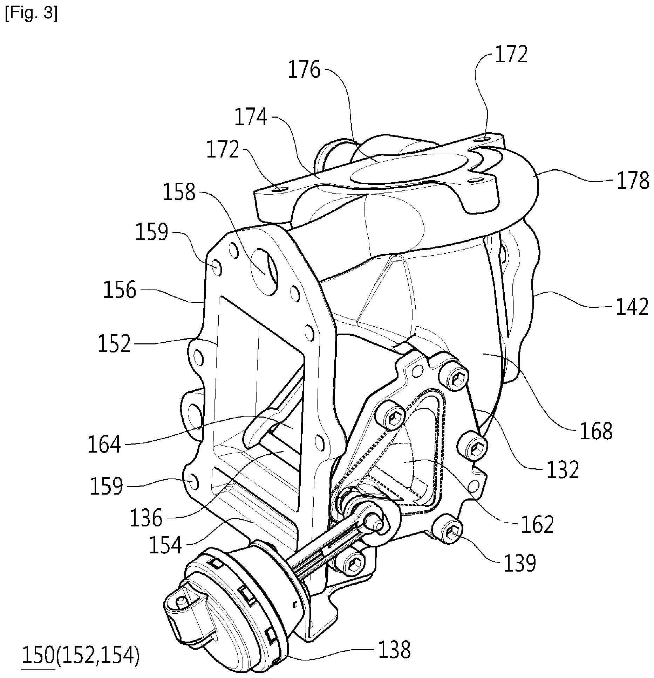

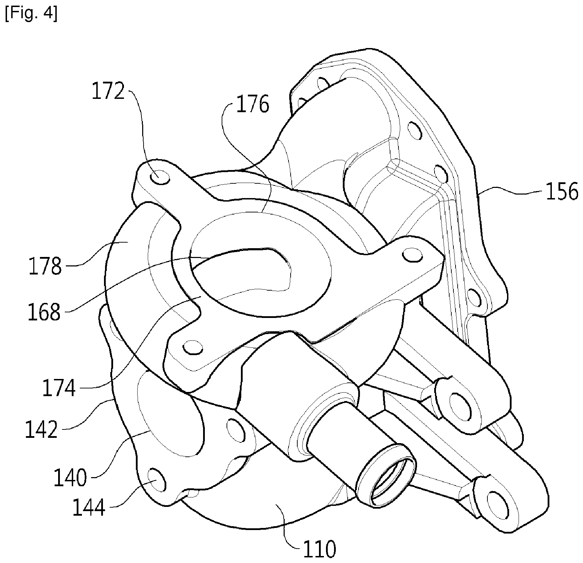

FIG. 2 is a diagram illustrating a state where the EGR valve is removed from the bypass valve having an EGR valve according to the embodiment of the invention. FIGS. 3 to 5 are diagrams illustrating the bypass valve shown in FIG. 2 as viewed in various directions.

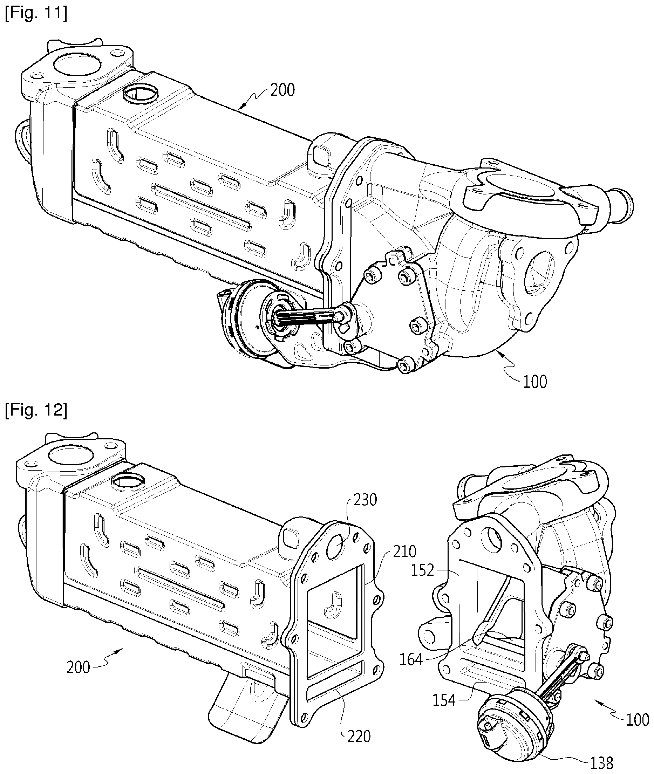

Referring to FIGS. 2 to 5, an intake port 140 for introducing exhaust gas is formed in a side surface of the valve housing 110 and an exhaust port 150 for discharging the introduced exhaust gas to an EGR cooler 200 (FIG. 12) is formed in another side surface. A gas transfer channel 160 connecting the intake port 140 and the exhaust port 150 is formed in the valve housing 110.

A flange 142 is formed around the intake port 140 for introducing the exhaust gas. The flange 142 is used for coupling to an inlet pipe (not shown) and plural coupling holes 144 are formed around the flange.

The exhaust port 150 includes a first exhaust port 152 for discharging exhaust gas to a cooling flow channel 210 (FIG. 12) of an EGR cooler 200 (FIG. 12), a second exhaust port 154 for discharging the exhaust gas to a bypass flow channel 220 (FIG. 12) of the EGR cooler 200, and a flange 156 formed around the first and second exhaust ports 152 and 154. The flange 156 is a part for coupling to the EGR cooler 200. A coolant inlet 158 connected to a coolant transfer channel 230 (FIG. 12) of the EGR cooler 200 and plural coupling holes 159 are formed in the flange 156.

The gas transfer channel 160 connecting the intake port 140 and the exhaust port 150 has a junction section 162 thereof in the middle thereof. The first and second exhaust ports 152 and 154 are formed at an end of the gas transfer channel 160 branched at the junction section 162. A flap 164 for discharging the exhaust gas introduced via the intake port 140 to one of the first and second exhaust ports 152 and 154 is swingably disposed in the junction section 162.

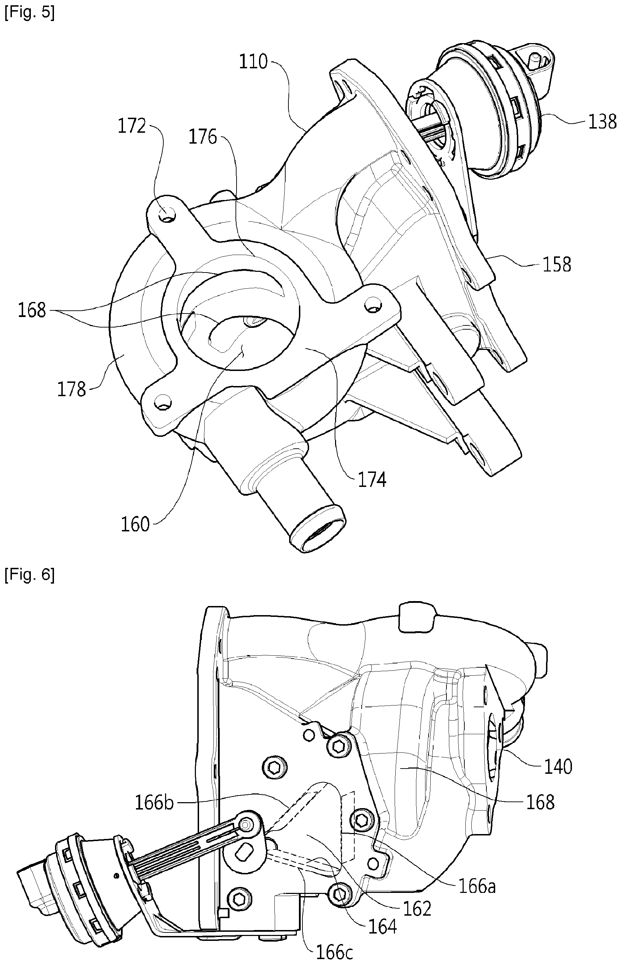

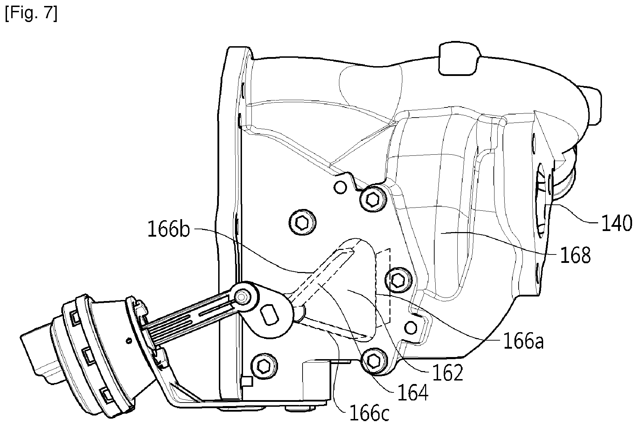

FIGS. 6 and 7 are diagrams illustrating the operation of the flap in the bypass valve having an EGR valve according to the embodiment of the invention. The junction section 162 and the flap 164 disposed in the junction section 162 will be described in detail with reference to FIGS. 6 and 7.

The junction section 162 is a prism-like space surrounded with three inner walls. An intake hole 166a is formed in one of three inner walls of the junction section 162 and first and second exhaust holes 166b and 166c are formed in the other two inner walls, respectively. The intake hole 166a is connected to the intake port 140, the first exhaust hole 166b is connected to the first exhaust port 152, and the second exhaust hole 166c is connected to the second exhaust port 154. The flap 164 is swingably disposed between the first exhaust hole 166b and the second exhaust hole 166c.

Here, the angle formed by two inner walls of the junction section 162 in which the first exhaust hole 166b and the second exhaust hole 166c are formed is in the range of 60° to 70°. That is, the swing angle of the flap 164 selectively opening and closing the first and second exhaust holes 166b and 166c is in the range of 60° to 70°.

In this way, when the swing angle of the flap 164 is in the range of 60° to 70°, the motion resistance is smaller than that of the past flap swinging in the range of 80° to 90°. That is, the flap 164 can move (swing) with only a part of an engine negative pressure (vacuum pressure generated in the engine). Accordingly, it is possible to conveniently distribute the engine negative pressure used in intake of external air and supply of fuel and to allow the flap 164 and the driving mechanism 130 for swinging the flap 164 to smoothly work.

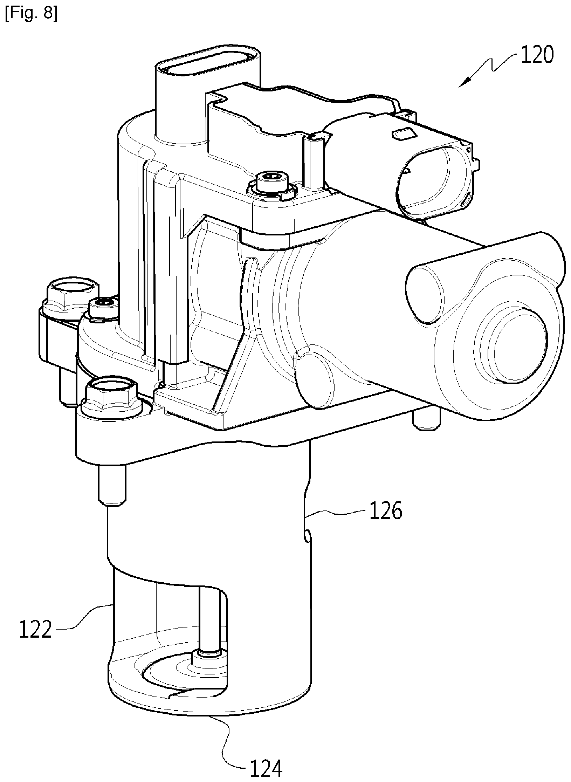

FIG. 8 is a diagram illustrating the EGR valve coupled to the bypass valve having an EGR valve according to the embodiment of the invention.

The EGR valve and the EGR valve coupling section will be described with reference to FIGS. 2 to 8. The EGR valve coupling section 170 is formed in the top surface of the valve housing 110 close to the intake port 140. The EGR valve coupling section 170 includes a flange 174 having plural coupling holes 172 formed therein and a coupling opening 176 which is formed at the center of the flange 174 and into and to which the EGR valve 120 (FIG. 1) is inserted and coupled. The coolant transfer channel 178 is formed around the EGR valve coupling section 170 and an auxiliary transfer channel 168 is formed in the inner wall of the coupling opening 176 into and to which the EGR valve 120 is inserted and coupled.

The EGR valve 120 is coupled to the EGR valve coupling section 170, and the lower part thereof is inserted into the coupling opening 176 and located at a position of the gas transfer channel 160 close to the intake port 140.

The EGR valve 120 is a valve for passing or intercepting the exhaust gas. An introduction port 122 and first and second discharge ports 124 and 126 are formed in the bottom of the EGR valve 120 located in the gas transfer channel 160. The introduction port 122 is formed on one side of the EGR valve 120 connected to the intake port 140. The first discharge port 124 is formed in the bottom of the EGR valve 120 and is connected to the gas transfer channel 160. The second discharge port 126 is formed on another side of the EGR valve 120 and is connected to the auxiliary transfer channel 168. That is, the exhaust gas discharged from the first discharge port 124 of the EGR valve 120 and the exhaust gas discharged from the second discharge port 126 are transferred to the gas transfer channel 160 and the auxiliary transfer channel 168, respectively.

In the valve housing 110 having the above-mentioned structure, since the amount of exhaust gas to be discharged is increased by the gas transfer channel 160 and the auxiliary transfer channel 168, the amount of exhaust gas to be introduced is also increased. Accordingly, it is possible to improve the recirculation efficiency of the exhaust gas, thereby reducing the amount of nitrogen oxide.

In the coolant transfer channel 178 formed around the EGR valve coupling section 170, one end is connected to a coolant channel 230 of the EGR cooler 200 (FIG. 12) via the coolant inlet 158 close to the exhaust port 150 and the other end is connected to a radiator (not shown). Accordingly, since the exhaust gas is first cooled by the use of the coolant, it is possible to further enhance the recirculation efficiency of the exhaust gas.

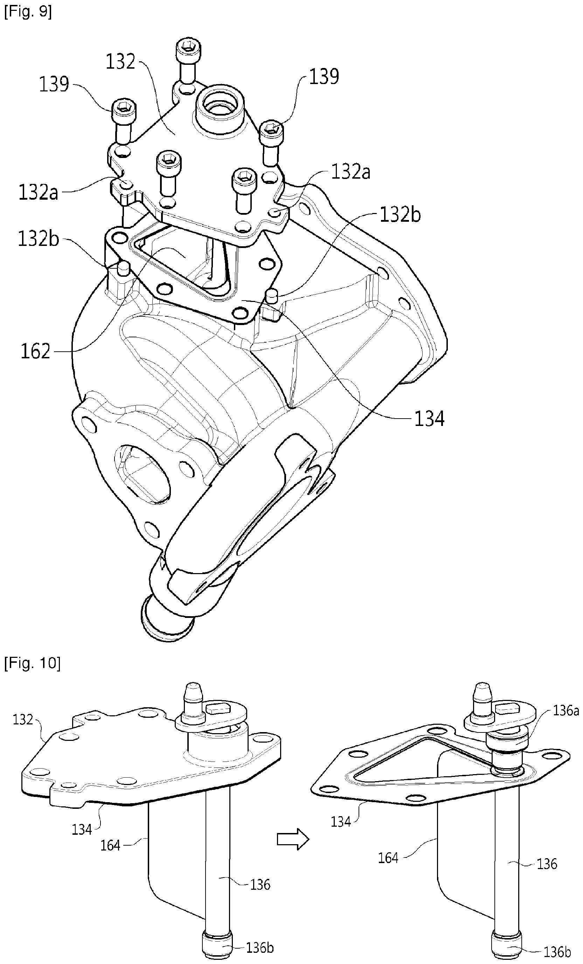

FIGS. 9 and 10 are diagrams illustrating the driving mechanism of the bypass valve having an EGR valve according to the embodiment of the invention. The driving mechanism 130 will be described in detail with reference to FIGS. 9 and 10.

The driving mechanism 130 includes a housing cover 132 coupled to the valve housing 110, that is, an end of the junction section 162, so as to seal the junction section 162, a gasket 134 disposed between the valve housing 110 and the housing cover 132, a shaft 136 formed through the housing cover 132 and the gasket 134 and having a flap 164 formed in the middle, and an actuator 138 (FIG. 2) disposed at an end of the shaft 136 protruding from the housing cover 132.

The shaft 136 is disposed in the valve housing 110 and the housing cover 132 so as to rotate with a pair of bearings 136a and 136b, as shown in FIG. 10. Accordingly, the shaft 136 can smoothly rotate, thereby preventing the axial twist at the time of rotation.

On the other hand, the housing cover 132 is detachably coupled to the valve housing 110 with fixing screws 139. Accordingly, it is possible to easily repair and replace the flap 164 and the shaft 136. Since the housing cover 132 need not be welded to the valve housing 110, it is possible to prevent the deformation of the housing cover 132 and the shaft 136 due to the welding heat.

On the other hand, positioning holes 132a and 132b for positioning the housing cover 132 at a correct position are formed in the housing cover 132 and the valve housing 110. By providing the positioning holes 132a and 132b, it is possible to prevent the warp of the shaft 136 at the time of assembly and to prevent the axial twist of the shaft 136 at the time of rotation.

The assembly of the housing cover 132 using the positioning holes 132a and 132b will be described. First, a rod-like jig 133 is inserted into the positioning holes 132b of the valve housing 110, and the gasket 134 and the housing cover 132 are assembled to the correct position using the jig and the positioning holes 132a of the housing cover 132. Thereafter, they are coupled and fixed to each other with the fixing screws 139 and then the jig 133 is removed.

FIGS. 11 and 12 are diagrams illustrating states where the EGR cooler is coupled to and decoupled from the bypass valve having an EGR valve according to the embodiment of the invention.

As shown in FIGS. 11 and 12, the EGR cooler 200 has both the cooling flow channel 210 and the bypass flow channel 220. The bypass valve 100 according to the embodiment of the invention has a structure which can be coupled to the EGR cooler 200.

The process of recirculating the exhaust gas using the bypass valve having an EGR valve according to the embodiment of the invention will be described with reference to FIGS. 11 and 12.

When the driving mechanism 130 works with the negative pressure of the engine, the flap 164 swings to selectively open one of the first and second exhaust ports 152 and 154. For example, when the first exhaust port 152 is opened, the exhaust gas is discharged to the cooling flow channel 210 of the EGR cooler 200 and is cooled therein. On the other hand, when the second exhaust port 154 is opened, the exhaust gas is discharged to the bypass flow channel 220 of the EGR cooler 200 and is bypassed.

Here, in the bypass valve 100 according to the invention, the EGR valve 120 (FIG. 1) is coupled to the valve housing 110 into a module, which is advantageous for guaranteeing a space for an engine room at the time of designing a vehicle engine. Components for connecting the bypass valve 100 and the EGR valve 120 are not necessary, thereby reducing the cost.

Since the flap 164 selectively opening and closing the first and second exhaust ports 152 and 154 swings in the rotation angle range of 60° to 70°, the motion resistance is small and thus the flap can swing with only a part of the negative pressure of the engine. Accordingly, it is possible to conveniently distribute the negative pressure of the engine used in intake of external air and supply of fuel and to allow the flap 164 and the driving mechanism 130 for swinging the flap 164 to smoothly work. In addition, since the motion of the driving mechanism 130 is minimized, the erroneous operation or the deformation is not caused even in a long-term use, thereby improving the durability.

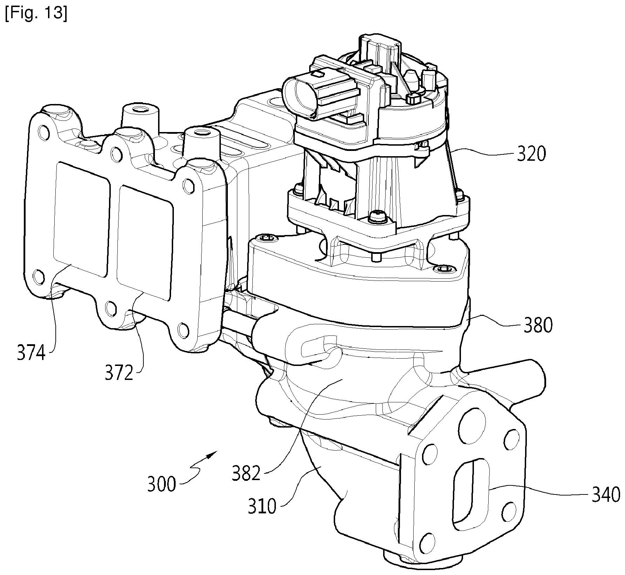

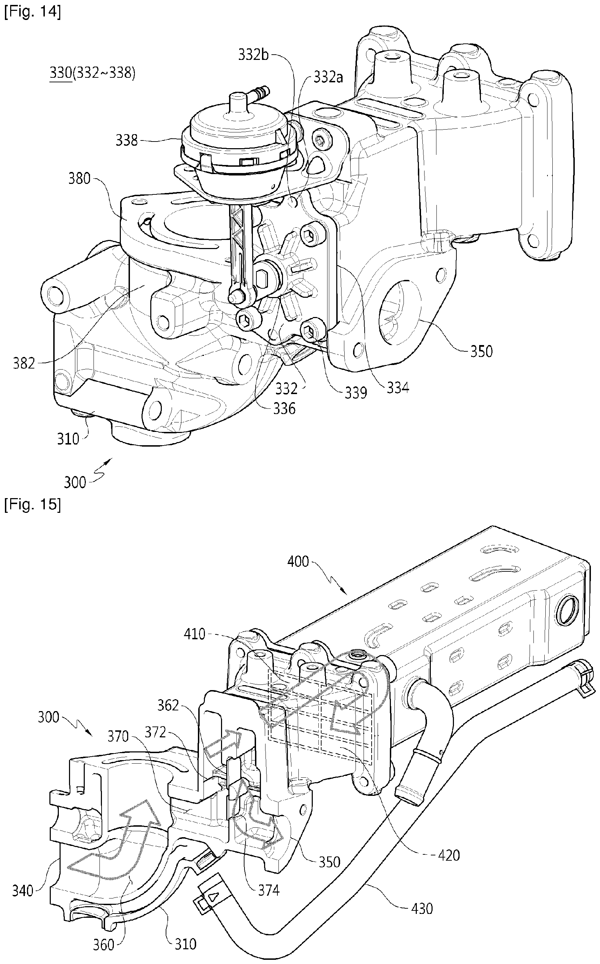

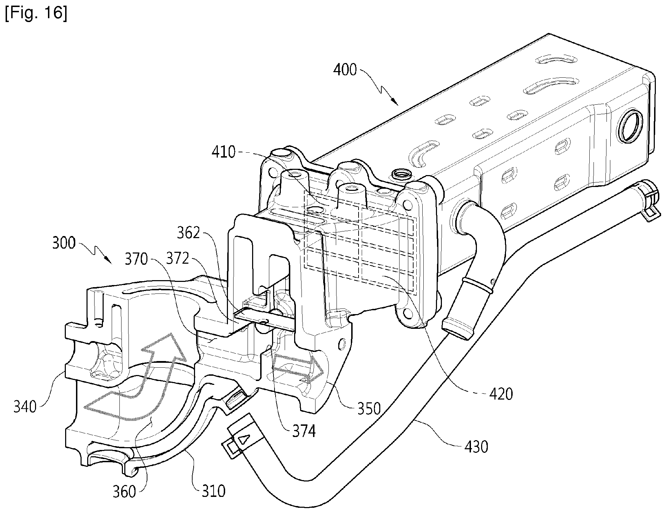

FIG. 13 is a diagram illustrating a bypass valve having an EGR valve according to another embodiment of the invention. FIGS. 14 is a diagram illustrating a state where the EGR valve is removed from the bypass valve shown in FIG. 13. FIGS. 15 and 16 are diagrams illustrating the process of recirculating the exhaust gas using the bypass valve having an EGR valve according to another embodiment of the invention.

As shown in FIGS. 13 to 16, the bypass valve 300 having an EGR valve according to the embodiment of the invention (hereinafter, referred to as "bypass valve") includes a valve housing 310, an EGR valve 320 coupled to the top surface of the valve housing 310, and a driving mechanism 330 coupled to the front surface of the valve housing 310.

The valve housing 310 will be first described. An intake port 340 for introducing exhaust gas is formed in one side surface and an exhaust port 350 for discharging the bypassed exhaust gas is formed in another side surface. A gas transfer channel 360 connecting the intake port 340 and the exhaust port 350 is formed in the valve housing 310. An EGR flow channel 370 for discharging the exhaust gas to an EGR cooler 400 is branched in the middle of the gas transfer channel 360.

First and second openings 372 and 374 are formed at an end of the EGR flow channel 370 coupled to the EGR cooler 400. The first opening 372 is connected to an introduction port 410 of the EGR cooler 400 so as to discharge the introduced exhaust gas to the EGR cooler 400. The second opening 374 is connected to a discharge port 410 formed in another side surface of the valve housing 310 so as to discharge the introduced exhaust gas to an intake manifold (not shown).

On the other hand, a flap 362 for selectively opening the EGR flow channel 370, that is, the first and second opening 372 and 374 of the EGR flow channel 370 is disposed in the middle of the EGR flow channel 370. The flap 362 selectively opens and closes the first and second openings 372 and 374 depending on the temperature of the exhaust gas. For example, when the temperature of the exhaust gas is high, the flap 362 swings to open the first opening 372 and to close the second opening 374, whereby the exhaust gas is discharged to the EGR cooler 400. On the other hand, when the temperature of the exhaust gas is low, the flap 362 swings to close the first opening 372 and to open the second opening 374, whereby the exhaust gas is bypassed to the intake manifold (not shown) via the exhaust port 350.

The valve housing 310 will be described in more detail. An EGR valve coupling section 380 is formed in the top surface of the valve housing 310 close to the intake port 340. A coolant transfer channel 382 is formed around the EGR valve coupling section 380. The coolant transfer channel 382 is connected to a coolant channel 430 of the EGR cooler 400 and a radiator (not shown).

On the other hand, the driving mechanism 330 includes a housing cover 332 coupled to the middle position of the gas transfer channel 360 at which the EGR flow channel 370 is branched, a gasket 334 disposed between the valve housing 310 and the housing cover 332, a shaft 336 formed through the housing cover 332 and the gasket 334 and having the flap 362 disposed in the middle thereof, and an actuator 338 disposed at an end of the shaft 336 protruding from the housing cover 332.

The housing cover 332 is detachably coupled to the valve housing 310 with the fixing screws 339. Similarly to the above-mentioned embodiment, positioning holes 332a are formed in the valve housing 310 and the housing cover 332 (the positioning holes of the valve housing 310 are not shown). Although not shown, the shaft 336 is disposed in the valve housing 310 and the housing cover 332 so as to rotate with a pair of bearings. Accordingly, it is possible to easily repair and replace the flap 362 and the shaft 336, to prevent the warp of the shaft 336 at the time of assembly, and to prevent the axial twist of the shaft 336 at the time of rotation.

While the exemplary embodiments of the invention have been described above, the embodiments are only examples of the invention, and it will be understood by those skilled in the art that the invention can be modified in various forms without departing from the technical spirit of the invention. Therefore, the scope of the invention should be determined on the basis of the descriptions in the appended claims, not any specific embodiment, and all equivalents thereof should belong to the scope of the invention.

## Claims

1. A bypass valve (100) having an EGR valve (120), comprising:
an intake port (140) formed in a side surface of a valve housing (110);
a first exhaust port (152) formed in another side surface of the valve housing (110) and connected to a cooling flow channel (210) of an EGR cooler (200);
a second exhaust port (154) formed adjacent to the first exhaust port (152) and connected to a bypass flow channel (220) of the EGR cooler (200);
a gas transfer channel (160) formed in the valve housing (110) and having a junction section (162) formed in the middle thereof so as to connect the intake port (140) to the first and second exhaust ports (152, 154);
an EGR valve coupling section (170) formed in the top surface of the valve housing (110) close to the intake port (140);
the EGR valve (120) coupled to the EGR valve coupling section and partially located at a position of the gas transfer channel (160) close to the intake port (140) so as to pass or intercept exhaust gas; and a flap (164) swingably disposed in the junction section (162) so as to selectively open and close the first and second exhaust ports (152, 154),
wherein the junction section (162) is a prism-like space surrounded with three inner walls, an intake hole (166a) connected to the intake port (140) is formed in one of the three inner walls, first and second exhaust holes (166b, 166c) connected to the first and second exhaust ports (152, 154), respectively, are formed in the other two inner walls, and the first and second exhaust holes (166b, 166c) are selectively opened and closed by the flap (164),
wherein the angle formed by the two inner walls having the first and second exhaust holes (166b, 166c) is in the range of 60° to 70°,
wherein a coolant transfer channel (230) is formed along the circumference of the EGR valve coupling section, an inlet (158) of the coolant transfer channel (230) is connected to a coolant outlet of the EGR cooler (200), and the outlet of the coolant transfer channel (230) is connected to a radiator,
wherein an auxiliary transfer channel (168) connected to the intake hole (166a) is formed in the inner wall close to the intake port (140) of the gas transfer channel (160) into which a part of the EGR valve (120) is inserted.

2. The bypass valve (100) having an EGR valve (120) according to claim 1, wherein a driving mechanism (130) for swinging the flap (164) is disposed on one side of the valve housing (110).

3. The bypass valve (100) having an EGR valve (120) according to claim 2, wherein the driving mechanism (130) includes:
a housing cover (132) coupled to an end of the junction section (160) so as to seal the junction section (160);
a gasket (134) disposed between the valve housing (110) and the housing cover (132);
a shaft (136) coupled to the housing cover (132) through the gasket (134) and having the flap (164) disposed in the middle thereof; and
an actuator (138) disposed at an end of the shaft (136) protruding from the housing cover (132).

4. The bypass valve (100) having an EGR valve (120) according to claim 3, wherein positioning holes (132a, 132b) are formed in the valve housing (110) and the housing cover (132).

## Patentansprüche

1. Bypass-Ventil (100) mit einem AGR-Ventil (120), umfassend:
eine Einlassöffnung (140), die in einer Seitenfläche eines Ventilgehäuses (110) ausgebildet ist;
eine erste Abgasöffnung (152), die in einer anderen Seitenfläche des Ventilgehäuses (110) ausgebildet und mit einem Kühlströmungskanal (210) eines AGR-Kühlers (200) verbunden ist;
eine zweite Abgasöffnung (154), die benachbart zu der ersten Abgasöffnung (152) ausgebildet ist und mit einem Bypass-Strömungskanal (220) des AGR-Kühlers (200) verbunden ist;
einen Gastransferkanal (160), der in dem Ventilgehäuse (110) ausgebildet ist und einen in der Mitte davon ausgebildeten Verbindungsabschnitt (162) aufweist, um die Einlassöffnung (140) mit der ersten und der zweiten Abgasöffnung (152, 154) zu verbinden;
einen in der oberen Fläche des Ventilgehäuses (110) nahe der Einlassöffnung (140) ausgebildeten AGR-Ventil-Kopplungsabschnitt (170);
wobei das AGR-Ventil (120) mit dem AGR-Ventil-Kopplungsabschnitt gekoppelt ist und teilweise an einer Stelle des Gastransferkanals (160) nahe der Einlassöffnung (140) angeordnet ist, um das Abgas zu weiterzuleiten oder abzufangen; und eine schwenkbar in dem Verbindungsabschnitt (162) angeordnete Klappe (164), um selektiv die ersten und zweiten Abgasöffnungen (152, 154) zu öffnen und zu schließen,
wobei der Verbindungsabschnitt (162) ein von drei Innenwänden umgebener, Prisma-artiger Raum ist, wobei ein mit der Einlassöffnung (140) verbundenes Einlassloch (166a) in einer der drei Innenwände ausgebildet ist, wobei in den beiden anderen Innenwänden ausgebildete erste und zweite Abgaslöcher (166b, 166c) mit den ersten bzw zweiten Abgasöffnungen (152, 154) verbunden sind, und wobei die ersten und zweiten Abgaslöcher (166b, 166c) selektiv durch die Klappe (164) geöffnet und geschlossen werden,
wobei der Winkel, der durch die beiden Innenwände mit den ersten und zweiten Abgaslöcher (166b, 166c) gebildet wird, im Bereich von 60° bis 70° liegt, wobei ein Kühlmitteltransferkanal (230) entlang des Umfangs des AGR-Ventil-Kupplungsabschnitts ausgebildet ist, wobei ein Einlass (158) des Kühlmitteltransferkanals (230) mit einem Kühlmittelauslass des AGR-Kühlers (200) verbunden und der Auslass des Kühlmitteltransferkanals (230) mit einem Kühler verbunden ist,
wobei ein zusätzlicher, mit dem Einlassloch (166a) verbundener Transferkanal (168) in der Innenwand nahe der Einlassöffnung (140) des Gastransferkanals (160) ausgebildet ist, in den ein Teil des AGR-Ventils (120) eingebracht ist.

2. Bypass-Ventil (100) mit einem AGR-Ventil (120) gemäß Anspruch 1, wobei auf einer Seite des Ventilgehäuses (110) ein Antriebsmechanismus (130) zum Schwenken der Klappe (164) angeordnet ist.

3. Bypass-Ventil (100) mit einem AGR-Ventil (120) gemäß Anspruch 2, wobei der Antriebsmechanismus (130) aufweist:
eine Gehäuseabdeckung(132), welche mit einem Ende des Gastransferkanals (160) gekoppelt ist, um den Gastransferkanal (160) abzudichten;
eine zwischen dem Ventilgehäuse (110) und der Gehäuseabdeckung (132) angeordnete Dichtung (134);
eine durch die Dichtung (134) mit der Gehäuseabdeckung (132) gekoppelte Welle (136), wobei die Klappe (164) in deren Mitte angeordnet ist, und
einen Stellantrieb (138), der an einem von der Gehäuseabdeckung (132) vorstehenden Ende der Welle (136) angeordnet ist.

4. Bypass-Ventil (100) mit einem AGR-Ventil (120) gemäß Anspruch 3, wobei im Ventilgehäuse (110) und der Gehäuseabdeckung (132) Positionierlöcher (132a, 132b) ausgebildet sind.

## Revendications

1. Soupape de dérivation (100) qui comporte une soupape EGR (120), comprenant :
un orifice d'admission (140) qui est formé dans une surface latérale d'un compartiment de soupapes (110) ;
un premier orifice d'échappement (152) qui est formé dans une autre surface latérale du compartiment de soupapes (110) et qui est connecté à un canal d'écoulement de refroidissement (210) d'un dispositif de refroidissement EGR (200) ;
un second orifice d'échappement (154) qui est formé de manière à être adjacent au premier orifice d'échappement (152) et qui est connecté à un canal d'écoulement de dérivation (220) du dispositif de refroidissement EGR (200) ;
un canal de transfert de gaz (160) qui est formé dans le compartiment de soupapes (110) et qui comporte une section de jonction (162) qui est formée dans sa partie centrale de manière à connecter l'orifice d'admission (140) aux premier et second orifices d'échappement (152, 154) ;
une section de couplage de soupape EGR (170) qui est formée dans la surface supérieure du compartiment de soupapes (110) à proximité de l'orifice d'admission (140) ;
la soupape EGR (120) qui est couplée à la section de couplage de soupape EGR et qui est partiellement située en une position du canal de transfert de gaz (160) qui est à proximité de l'orifice d'admission (140) de manière à laisser passer ou à intercepter le gaz d'échappement ; et un volet (164) qui est disposé, de manière à pouvoir pivoter, dans la section de jonction (162) de manière à ouvrir et fermer de façon sélective les premier et second orifices d'échappement (152, 154), dans laquelle :
la section de jonction (162) est un espace en forme de prisme qui est entouré par trois parois internes, un trou d'admission (166a) qui est connecté à l'orifice d'admission (140) est formé dans l'une des trois parois internes, des premier et second trous d'échappement (166b, 166c) qui sont respectivement connectés aux premier et second orifices d'échappement (152, 154) sont formés dans les deux autres parois internes, et les premier et second trous d'échappement (166b, 166c) sont ouverts et fermés de façon sélective par le volet (164), dans laquelle :
l'angle qui est formé par les deux parois internes qui comportent les premier et second trous d'échappement (166b, 166c) est dans la plage de 60° à 70°,
dans laquelle :
un canal de transfert de liquide de refroidissement (230) est formé le long de la circonférence de la section de couplage de soupape EGR, une entrée (158) du canal de transfert de liquide de refroidissement (230) est connectée à une sortie de liquide de refroidissement du dispositif de refroidissement EGR (200), et la sortie du canal de transfert de liquide de refroidissement (230) est connectée à un radiateur, dans laquelle :
un canal de transfert auxiliaire (168) qui est connecté au trou d'admission (166a) est formé dans la paroi interne à proximité de l'orifice d'admission (140) du canal de transfert de gaz (160) à l'intérieur duquel une partie de la soupape EGR (120) est insérée.

2. Soupape de dérivation (100) qui comporte une soupape EGR (120) selon la revendication 1, dans laquelle un mécanisme d'entraînement (130) pour faire pivoter le volet (164) est disposé sur un côté du compartiment de soupapes (110).

3. Soupape de dérivation (100) qui comporte une soupape EGR (120) selon la revendication 2, dans laquelle le mécanisme d'entraînement (130) inclut :
un couvercle de compartiment (132) qui est couplé à une extrémité de la section de jonction (160) de manière fermer hermétiquement la section de jonction (160) ;
un joint d'étanchéité (134) qui est disposé entre le compartiment de soupapes (110) et le couvercle de compartiment (132) ;
un arbre (136) qui est couplé au couvercle de compartiment (132) par l'intermédiaire du joint d'étanchéité (134) et qui comporte le volet (164) disposé dans sa partie centrale ; et
un actionneur (138) qui est disposé au niveau d'une extrémité de l'arbre (136) qui fait saillie depuis le couvercle de compartiment (132).

4. Soupape de dérivation (100) qui comporte une soupape EGR (120) selon la revendication 3, dans laquelle des trous de positionnement (132a, 132b) sont formés dans le compartiment de soupapes (110) et le couvercle de compartiment (132).
